# EUROPEAN PATENT APPLICATION

(11) **EP 4 625 209 A1**
(43) Date of publication of application: **01.10.2025**
(21) Application number: 24167964.6
(22) Date of filing: 31.03.2024
(51) Int. Cl.: G06F 16/957

(54) **METHOD FOR MANAGING UPDATES TO CACHED PAGES AND SYSTEM THEREOF**

(30) Priority: 30.03.2024 US 202418622919
(71) Applicant: Infosys Limited, 560-100 Bangalore (IN)
(72) Inventor: WESTON-LEWIS, Sebastian, London, UB9 5FN (GB); GUPTA, Himanshu, 134109 Panchkula (IN)
(74) Representative: Finnegan Europe LLP

(57) **Abstract**

The disclosure relates to method and system for managing recaching of pages. The method includes extracting (304) a set of attributes associated with a page. The method includes generating (306) a set of first scores and a second score. Each of the set of first scores is generated based on an associated subset of the set of attributes and the second score is generated based on a set of network parameters. The method includes determining (308) a recaching action for the page, based on the set of first scores and the second score using a Machine Learning (ML) model (118).

## Description

### TECHNICAL FIELD

The present disclosure relates to data caching, and more particularly to a system and method for managing updates to cached pages.

### BACKGROUND

In today's digital world, the websites have become increasingly complex and dynamic as they consist of numerous pages, each serving a unique purpose and containing different types of content. Managing these pages efficiently is a significant challenge, especially for large-scale websites. Since these websites are complex and dynamic, optimizing websites performance has become difficult for delivering a seamless user experience. Caching pages plays a crucial role in improving load time for these pages and reducing server load by storing copies of page and page elements. However, the effectiveness of caching relies heavily on timely and regular updates to cached content. Currently used techniques for updating cache of pages aim to strike a balance between resource efficiency and content freshness. Yet, they face challenges due to the lack of real-time decision-making capabilities, resulting in suboptimal caching strategies and potential user experience issues.

Therefore, there is a need for a technique that may dynamically assess worthiness of updating cache of the pages by leveraging real-time decision-making using Machine Learning (ML) models.

### SUMMARY

In one embodiment, a method for managing recaching of pages is disclosed. In one example, the method may include extracting a set of attributes associated with a page. The method may further include generating a set of first scores and a second score. It should be noted that each of the set of first scores is generated based on an associated subset of the set of attributes and the second score is generated based on a set of network parameters. The method may further include determining a recaching action for the page based on the set of first scores and the second score using a Machine Learning (ML) model.

In another embodiment, a system for managing recaching of pages is disclosed. In one example, the system may include a processer and a memory communicatively coupled to the processer. The memory may store processor-executable instructions, which, on execution, may cause the processer to extract a set of attributes associated with a page. The processor-executable instructions, on execution, may further cause the processer to generate a set of first scores and a second score. It should be noted that, each of the set of first scores is generated based on an associated subset of the set of attributes and the second score is generated based on a set of network parameters. The processor-executable instructions, on execution, may further cause the processer to determine a recaching action for the page based on the set of first scores and the second score, using a Machine Learning (ML) model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates a block diagram of system for managing recaching of pages, in accordance with an exemplary embodiment of the present disclosure;
**FIG. 2** illustrates a block diagram of various modules within a memory of a server configured for managing recaching of pages, in accordance with some embodiments of the present disclosure;
**FIG. 3** illustrates a flowchart of an exemplary process for managing recaching of pages, in accordance with some embodiments of the present disclosure;
**FIG. 4** illustrates a flowchart of an exemplary process for training an ML model to determine a recaching action for a page, in accordance with some embodiments of the present disclosure;
**FIG. 5** is a flow diagram depicting training of an ML model to determine a recaching action for a page, in accordance with some embodiments of the present disclosure;
**FIG. 6** illustrates a flowchart of an exemplary process for determining a recaching action for a page, in accordance with some embodiments of the present disclosure;
**FIG. 7** illustrates a flowchart of an exemplary process for recaching a plurality of pages, in accordance with some embodiments of the present disclosure; and
**FIG. 8** illustrates a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims. Additional illustrative embodiments are listed below.

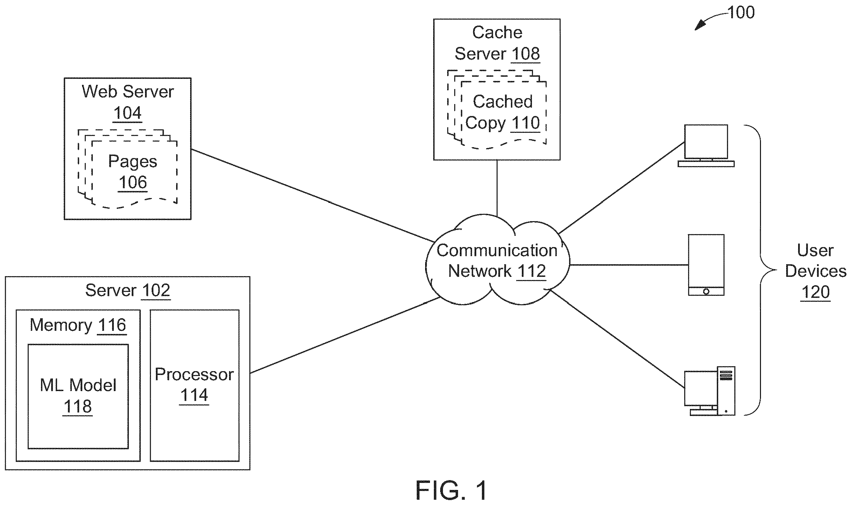

**FIG. 1** illustrates a block diagram of a system 100 for managing recaching of pages, in accordance with an exemplary embodiment of the present disclosure. The system 100 may include a server 102, a web server 104 that hosts a website with pages 106, a cache server 108 that may host a cached copy 110 of the pages 106, and a plurality of user devices 120 (for example, a laptop, a desktop, and a mobile phone) that may be communicatively coupled with each other via a communication network 112. It will be apparent to a person skilled in the art that in some embodiments the web server 104 may incorporate functionalities and capabilities of the server 102. In such cases, the server 102 may not be required to perform respective functionalities as further described in the specifications. Further, it may be noted that the cache server 108 may be one of a plurality of servers within a Content Delivery Network (CDN). The plurality of servers may be geographically distributed and may cache a content (for example, webpages of a website) at the network edge in order to solve the issues of network disruption and latency while accessing the content (for example, the website). Various other features and functionalities of the CDN will be apparent to a person skilled in the art. Examples of the communication network 112 may include, but may not be limited to, a wireless fidelity (Wi-Fi) network, a light fidelity (Li-Fi) network, a local area network (LAN), a wide area network (WAN), a metropolitan area network (MAN), a satellite network, the Internet, a fiber optic network, a coaxial cable network, a radio frequency (RF) network, and a combination thereof.

It may be noted that multiple such cache servers 108 may be communicatively coupled to the communication network 112, based on geographical location of each of the plurality of user devices 120. When a user device from the plurality of user devices 120 tries to access the pages 106 of the website, the access request from the user device is routed to the cache server 108. This enables prompt loading of the cached copy 110 of the pages 106 on the user device. The user device may be routed to the nearest cache server 108. However, the cached copy 110 may not reflect the current version of the pages 106, and the user device may end up accessing an older version of the pages 106. To overcome this problem, the server 102 may ensure that the pages 106 are promptly recached, such that, user experience is not compromised. It may be noted that the recaching of a page from the pages 106 may be defined as a process of updating or refreshing the cached copy 110 of the page on the cache server 108 with the latest version of the page stored on the web server 104, for example. In other words, whatever modifications are made to the page may be reflected in the corresponding cached copy 110 of the page stored on the cache server 108. The reaching action may be performed by the cache server 108. As a result, a user is able to access the current version of the page without experiencing any network latency.

The server 102 may be a centralized server or a group of decentralized servers. The server 102 may include a processor 114 and a memory 116. The memory 116 may be a non-volatile memory or a volatile memory. Examples of non-volatile memory may include, but are not limited to, a flash memory, a Read Only Memory (ROM), a Programmable ROM (PROM), Erasable PROM (EPROM), and Electrically EPROM (EEPROM) memory. Examples of volatile memory may include, but may not be limited to, Dynamic Random Access Memory (DRAM), and Static Random-Access Memory (SRAM).

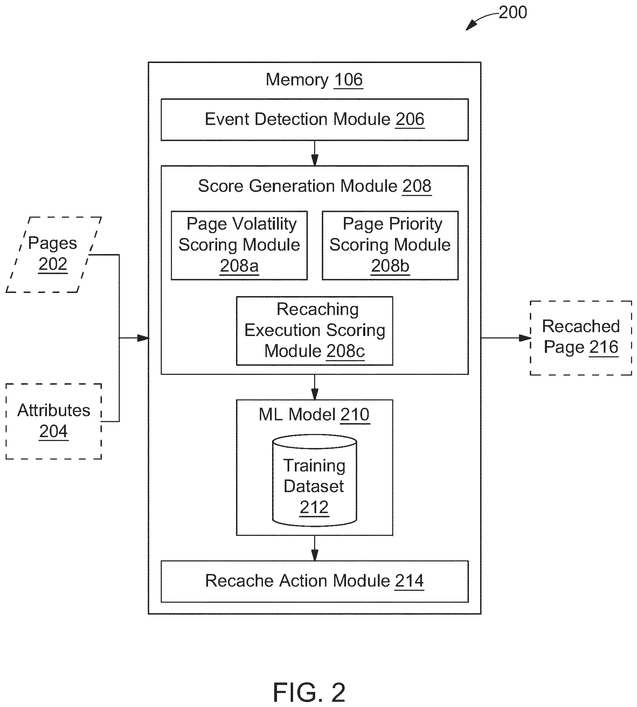

The memory 116 may store processor instructions. The processor instructions, when executed by the processor 114, may cause the processor 114 to implement one or more embodiments of the present disclosure such as, but not limited to, extracting a set of attributes associated with one or more the pages 106 and generating a set of first scores based on an associated subset of the set of attributes and a second score based on a set of network parameters. The memory 116 may include an ML model 118 that may be used to determine a recaching action for one or more of the pages 106, based on the set of first scores and the second score. Examples of the ML model 118 may include but are not limited to logistic regression, Naive Bayes, K Nearest Neighbors, random forest, boosting algorithms, k-means, hierarchical clustering, Convoluted Neural Network (CNN), Recurrent Neural Network (RNN), Multi-Layer Perceptrons (MLP), Long Short Term Memory (LSTM), Generative Adversarial Networks (GANs), Radial Basis Function Networks (RBFNs), Self-Organizing Maps (SOMs), Deep Belief Networks (DBNs), Restricted Boltzmann Machines( RBMs), or Graph Neural Network (GNN). The memory 116 may also include various modules that enable the server 102 to perform recache management of the pages 106. These modules are explained in detail in conjunction with FIG. 2.

In order to manage recaching of a first page from the pages 106, the server 102 may extract a set of attributes associated with the first page via the communication network 112. The set of attributes may be extracted from the web server 104 and the cache server 108. As discussed before, the pages 106 may belong to a website that is hosted on the web server 104 and the cache copy 110 of the pages 106 may also be accessed by one or more of the plurality of user devices 120. The website may be from any of the following sectors including, but may not be limited to, retail, e-commerce, online advertising, social media, telecommunications, insurance, automotive industry, financial services, travel, transportation, logistics, real estate, public and social sector, sports, energy, mining, healthcare, education, or consumer packaged goods. Additionally, the pages 106 may be webpages that may vary depending on a type of website. For example, in an e-commerce website, the pages 106 may include, but are not limited to a homepage, a product details page, a login page, or a checkout page. By way of another example, in a travel-based website, the pages 106 may include, but are not limited to, a homepage, destination pages, search result pages, booking pages, or review pages.

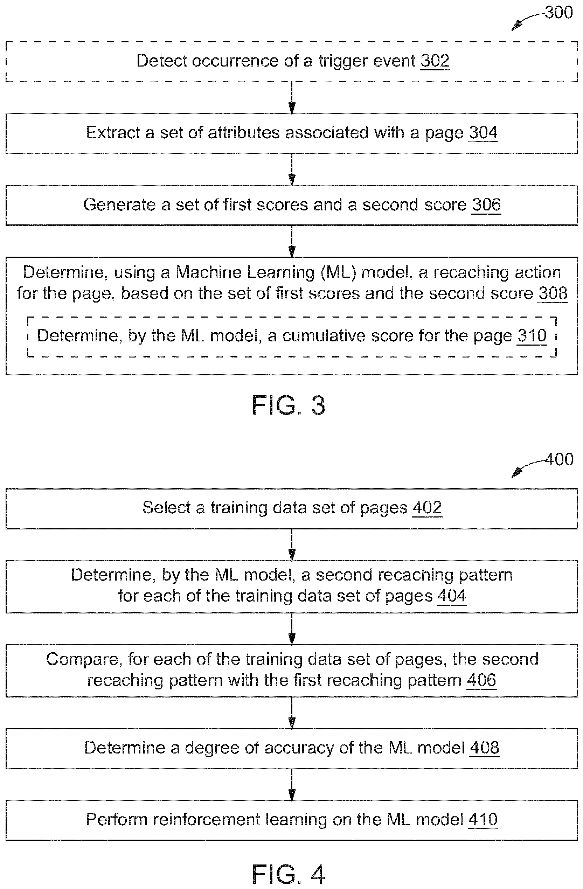

The set of attributes associated with the first page may include, but is not limited to, a periodically recorded frequency of modification for the first page over a time period, a volume of traffic associated with the first page over a plurality of time periods, a plurality of traffic sources associated with the first page, a plurality of access patterns associated with the first page, and data associated with users and devices (i.e., the plurality of user devices 120) accessing the first page. The set of attributes are explained in detail in conjunction with FIG. 2 and FIG. 3.

The server 102 may generate a set of first scores based on an associated subset of the set of attributes for the first page. One of the set of first scores may be a page volatility score that is generated based on a first subset selected from the set of attributes. The page volatility score is representative of frequency of modifications associated with the first page over a time period. In other words, the more frequent are modifications to a given page, higher is the page volatility score for that page. A page with a high page volatility score may require frequent recaching.

Another one of the set of first scores may be a page priority score that is generated based on a second subset of the set of attributes. The page priority score may be representative of weighted average of attributes in the second subset. At a first level, the attributes used to determine the page priority score may include industry vertical, locale, breakpoint, or page type. Industry vertical, for example, may include, but is not limited to e-commerce, travel, news and media, retail, telecom, or social media. Locale corresponds to a language in which the page is rendered and may include, for example, English, Mandarin, Spanish, French, Russian, Greek, Hindi, Japanese, Portuguese, or Swahili. Breakpoint may correspond to width of a page defined by a device that may render that page. Examples of breakpoint may include, but are not limited to tablet, smartphone, laptop, desktop, or smart TV. Page type, for example, may include, but is not limited to "Product Listings Page," "Product Detail Page," "Checkout Page." The attributes at the first level may be extracted from type of content on the page (for example, product lists, product detail information, content-heavy pages), the structure of the Uniform Resource Locator (URL), or metadata associated with the page.

At a second level, the attributes used to determine the page priority score may include, but are not limited to sources of traffic to the page (for example, direct, search, affiliate link, social network), patterns of traffic volume (for example, traffic time information, traffic geographical information, traffic demographical information, and concentration information), inventory availability, frequency of changes related to availability, conversion rates, or frequency of price changes. It may be noted that the above given examples of these attributes are not exhaustive and may vary depending on the specific applications being considered.

For a given page, each of the attributes at the second level may also be assigned weights. The assigned weight may indicate significance of each attribute in defining importance of that attribute for the page. By way of an example, for an e-commerce webpage, the attribute `conversion rates' may have the highest weight of '0.5' while the attribute `number of views' may have the weight of `0.3' and the attribute `sources of traffic to the page' may have the weight of `0.2.' By way of another example, for a news webpage, the attribute `number of views' may have the highest weight of '0.5' and the attribute `sources of traffic to the page' may have the weight of '0.4'. In other words, an attribute that may have greater impact on distinguishing priority or importance of a page may be assigned higher weights, while a less influential attribute may be assigned a lower weight. A page priority score for a page may be determined as a weighted sum of values of relevant attributes for that page.

The server 102 may also generate a second score based on a set of network parameters. The second score may be a recaching execution score representative of the time required by the cache server 108 (or the CDN) to recache the page. The time required to recache the page may be determined based on a plurality of pre-recorded values of the set of network parameters. In other words, the values of the network parameters at past time instances and time required to recache the page at these time instances may be used to determine the recaching execution score. The set of network parameters may include bandwidth, throughput, latency, packet loss, and jitter associated with the network being used by the cache server 108 to recache a given page.

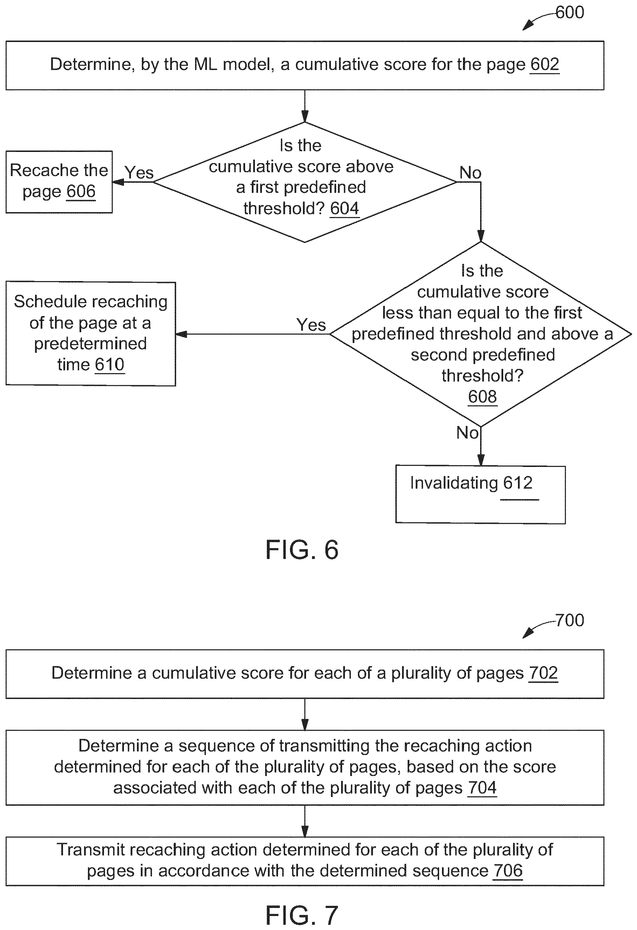

The server 102 may then provide the page volatility score, the page priority score, and the recaching execution score to the ML model 118. The ML model 118 may compute a cumulative score and may then determine a recaching action for the page based on the cumulative score. The server 102 may communicate the recaching action to the cache server 108, which may then perform the recaching action. The recaching action may include a strategy of recaching as well. Based on the strategy of recaching, the server 102 may communicate the recaching action immediately to the cache server 108 or at a scheduled time. Apart from recaching the first page, the recaching action, for example, may be invalidating an existing cache of the first page on the cache server 108 or scheduling recaching at a predefined time of a day. It may be noted that along with the recaching action, the server 102 may also share details regarding the page with the cache server 108. The details, for example, may include the URL, the Uniform Resource Identifier (URI), the Uniform Resource Name (URN), and/or the communication protocol used by the page. This is further explained in detail in conjunction with FIG. 6.

In other words, the server 102 may communicate a recaching request (alternatively referred to as "recaching command") to the cache server 108. The recaching request may be indicative of the determined recaching action. Further, the recaching request may be include the URL, the URN, and/or the URI associated with the page. Based on the recaching strategy, the server 102 may communicate the recaching request to the cache server 108 immediately or at a pre-determined time (e.g., 5 hours later, at 12:00 pm the next day, or the like). The server 102, based on the received recaching request, may execute/perform the recaching action indicated by the recaching request. In an exemplary scenario, the recaching request may indicate that that the page is to be re-cached immediately (i.e., the reaching action corresponds to immediate recaching of the page) since a new version of the page is now deployed by the server 102 (or the web server 104, as applicable). Consequently, the cache server 108 may recache the page by querying the server 102 (or the web server 104) and downloading the new version of the page (e.g., in a rendered HTML format, a rendered JavaScript format, or the like) for caching (i.e., recaching). Upon downloading the new version of the page, the cache server 108 may overwrite an existing cache for the page with the downloaded version of the new page, thereby recaching the page.

In another exemplary scenario, the recaching request may indicate that that the page is to be re-cached at a scheduled time (i.e., the reaching action corresponds to recaching at a scheduled time). Consequently, the cache server 108 may recache the page by querying the server 102 at the scheduled time and downloading the new version of the page for recaching.

In another exemplary scenario, the recaching request may indicate that that an existing cache for the page is to invalidated (i.e., recaching action corresponds to invalidation of existing cache). Based on the recaching request, the existing cache for the page would be invalidated or wiped. Following the invalidation of the existing cache, a cache/ a cached version of the page may not be maintained by the cache server 108.

**FIG. 2** is a block diagram 200 that illustrates various modules within the memory 116 of the server 102 configured for managing recaching of pages, in accordance with an exemplary embodiment of the present disclosure. FIG. 2 is explained in conjunction with elements from FIG. 1. The memory 116 may include various modules that enable the server 102 to perform recaching of the pages. These modules may include an event detection module 206, a score generation module 208, and a recache action module 214. The score generation module 208 may further include a page volatility scoring module 208a, a page priority scoring module 208b, a recaching execution scoring module 208c.

In order to manage recaching of a page 202 (such as a webpage), initially, the event detection module 206 may be configured to detect occurrence of the trigger event corresponding to the page 202. It should be noted that the occurrence of the trigger event detected corresponding to the page 202 may include information associated with the page 202 that has been modified and values of attributes 204 associated with the page 202. In an embodiment, the page 202 may be associated with the website.

The trigger event may be the modification in the page 202. Further, the modification in the page 202 may include content alteration in the page 202, structure modification in the page 202, or updating of metadata associated with the page 202. Content alteration may include modification to any existing audio elements, visual elements, or textual elements or introduction of new audio elements, visual elements, or textual elements within the page 202. By way of an example, the page 202 may be a product listing page of an e-commerce website that sells shoes. In some scenarios, a new shoe designs may be added to the page 202, existing shoe designs may be removed from the page 202, or inventory availability for existing shoes may be updated on the page 202. All these scenarios may correspond to a content alteration in the page 202. Further, with regards to structure of the page 202, it may include the DOCTYPE declaration (specifies the version of Hyper Text Markup Language (HTML) used), HTML tags (enclose all the content of a page), head and body sections, and various content elements like headers, paragraphs, links, and images. Thus, any modification made to these structure elements may also act as trigger events. Lastly, metadata (or meta tags) associated with the page 202 may be short snippets of text that describe content of the page 202 and are used by search engines. The metadata may be stored in the HTML code or within the head section of the page 202. The metadata may get modified in response to any change in the content or structure of the page 202.

The website may be of any of the following sectors including, but may not be limited to, retail, e-commerce, online advertising, social media, telecommunications, insurance, automotive industry, financial services, travel, transportation, logistics, real estate, public and social sector, sports, energy, mining, healthcare, education, or consumer packaged goods. Additionally, the page 202 may be a webpage that may vary depending on the type of website. For example, in the case of an educational website, the page 202 may correspond to a homepage, an "about us" page, an academic program page, an enrollment page, an event page, a "contact us" page, and the like. Further, in case the page 202 is the homepage of the educational website, the modifications corresponding to which the trigger event may be detected may correspond to, for example, an update in an academic program description, a navigation menu adjustment, or an update in title tags or meta descriptions of the page, and the like.

Based on detection of the occurrence of the trigger event, the event detection module 206 may be configured to extract the attributes 204, i.e., the set of attributes associated with the page 202. The set of attributes may include, but are not limited to, the periodically recorded frequency of modification for the page 202 over a time period, the volume of traffic associated with the page 202 over a plurality of time periods, the plurality of traffic sources associated with the page 202, a plurality of access patterns associated with the page 202, and data associated with users and devices accessing the page 202.

The periodically recorded frequency of modification for the page 202 may correspond to a frequency at which the page 202 is updated to stay relevant and engaging. Further, the frequency of modification of the page 202 depends on various factors that includes the type of the website to which the page 202 belongs, nature of its content, audience engagement, business objectives, and the like. For example, the e-commerce website may be required to be updated daily or weekly depending upon updates in its product listings page with new arrivals, promotions, discounts, customer reviews, product descriptions, images, prices, availability of product in inventory, and the like. By way of another example, the educational website may be required to be updated quarterly or annually depending on updates in academic program information, event calendar for each academic semester or year based on changes in curriculum, faculty, schedules, and registration deadlines, and the like.

The volume of traffic associated with the page 202 may refer to an amount of visitor activity (i.e., user activity) or a number of views that the page 202 receives over a plurality of time periods, e.g., daily traffic, weekly traffic, monthly traffic, seasonal traffic, event-driven traffic, etc. Further, this volume of the traffic may fluctuate based on various factors such as popularity of content of the page 202, marketing efforts, search engine rankings, seasonality, external events, and the like. The plurality of traffic sources associated with the page 202 may correspond to origins or channels through which the users arrive at the page 202.

Further, the plurality of access patterns associated with the page 202 may correspond to ways in which the users interact with the page 202 including a browsing pattern, a search pattern, a direct access pattern, a repeat visit pattern, a session length pattern, and the like. The data associated with the user and devices (i.e., the user device) accessing the page 202 may correspond to various metrics and attributes that provide insights into characteristics, behavior, and preferences of the user. The data for example, may include, user demographic data, user behavior data, user device information (e.g., device type (desktop, smartphone, tablet, etc.)), operating system, screen resolution, model of the user device), geolocation data, etc.

Based on extraction of the attributes 204, the score generation module 208 may be configured to generate the set of first scores and the second score for the page 202. The set of first scores may include the page volatility score and the page priority score. The page volatility score may be generated by the page volatility scoring module 208a of the score generation module 208. The page volatility scoring module 208a may generate the page volatility score for the page 202 based on the first subset selected from the set of attributes. The page volatility score is representative of frequency of modifications associated with the page 202 over the time period. In other words, the more frequent are modifications to a given page, higher is the page volatility score for that page. A page with a high page volatility score may require frequent recaching.

Further, the page priority scoring module 208b may be configured to generate the page priority score for the page 202. The page priority score may be generated based on the second subset of the set of attributes. The page priority score may be representative of weighted average of attributes in the second subset. At the first level, the attributes used to determine the page priority score may include industry vertical, locale, breakpoint, or page type. Industry vertical, for example, may include, but is not limited to e-commerce, travel, news and media, retail, telecom, or social media. Locale corresponds to a language in which the page 202 is rendered and may include, for example, English, Mandarin, Spanish, French, Russian, Greek, Hindi, Japanese, Portuguese, or Swahili. Breakpoint may correspond to width of a page defined by a device that may render that page. Examples of breakpoint may include, but are not limited to tablet, smartphone, laptop, desktop, or smart TV. Page type, for example, may include, but is not limited to "Product Listings Page," "Product Detail Page," "Checkout Page." The attributes at the first level may be extracted from the type of the content on the page 202 (for example, product lists, product detail information, content-heavy pages), the structure of the URL, or metadata associated with the page.

At the second level, the attributes used to determine the page priority score may include, but are not limited to sources of traffic to the page 202 (for example, direct, search, affiliate link, social network), patterns of traffic volume (for example, traffic time information, traffic geographical information, traffic demographical information, and concentration information), inventory availability, frequency of changes related to availability, conversion rates, or frequency of price changes. It should be noted that, for the page 202, each of the attributes at the second level may also be assigned weights. The assigned weight may indicate significance of each attribute in defining importance of that attribute for the page. In other words, an attribute that may have greater impact on distinguishing priority or importance of the page 202 may be assigned higher weights, while a less influential attribute may be assigned a lower weight. The page priority score for the page 202 may be determined as the weighted sum of values of relevant attributes for that page.

Further, the second score for the page 202 may be the recaching execution score representative of the time required to recache the page 202. The second score may be generated by the recaching execution scoring module 208c of the score generation module 208. The recaching execution scoring module 208c may generate the second score for the page based on the set of network parameters. The second score may be representative of the time required by the cache server 108 (or the CDN) to recache the page 202. The time required to recache the page 202 may be determined based on a plurality of pre-recorded values of the set of network parameters. In other words, the values of the network parameters at past time instances and time required to recache the page 202 at these time instances may be used to determine the recaching execution score. The set of network parameters may include bandwidth, throughput, latency, packet loss, and jitter associated with the network being used to recache the page 202 at a cache server, i.e., the cache server 108.

The score generation module 208 may then provide the page volatility score, the page priority score, and the recaching execution score to an ML model 210. With reference to FIG. 1, the ML model 210 may correspond to the ML model 118. It should be noted that the ML model 210 may be pretrained based on training dataset 212. Further, the ML model 210 may be configured to determine the recaching action for the page 202. In order to determine the recaching action, the ML model 210 may compute the cumulative score for the page 202. The ML model 210 may compute the cumulative score based on the page volatility score, the page priority score, and the recaching execution score. Further, the ML model 210 may be configured to determine the recaching action for the page 202 based on the computed cumulative score. Apart from reaching the page, the recaching action, for example, may be invalidating an existing cache of the page 202 on the cache server 108 or scheduling the recaching a predefined time of a day. The recaching action may also include a strategy of recaching. The strategy for recaching may be communicating the recaching action immediately to the cache server 108 or at a scheduled time. This is further explained in detail in conjunction with FIG. 6.

The ML model 210 may provide the recaching action that includes the strategy for recaching to the recache action module 214. Accordingly, the recache action module 214 may be configured to immediately transmit the recaching action to the cache server 108. The cached server 108 may either initiate recaching of the page 202 as soon as it receives the reaching action or may initiate recaching at the predefined time of the day. For example, suppose the recaching action determined by the ML model 210 for the page 202 may be immediate recaching of the page 202. In this case, the recache action module 214 may instantly communicate the recaching action to the cache server 108, which may then initiate the recaching of the page 202 instantly to generate a recached page 216. It will be apparent that the process of recaching may not be instant and may require time based on existing network constraints faced by the cache server 108. By way of another example, suppose the strategy for recaching as determined by the ML model 210 for the page 202 may be scheduling transmission of the recaching action at 3:00 A.M. on 01 April 2024. In this case, the recache action module 214 may automatically transmit the recaching action to the cache server 108 at 3:00 A.M. on 01 April 2024. Accordingly, the cache server 108 may recache the page 202 as per the recache action determined by the ML model 210 to generate the recached page 216. It may be noted that the recached page 216 of the page 202 may be correspond to a cached copy of the page 202 that is updated to reflect modifications done on the page 202. Along with the recaching action, the recache action module 214 may also share details regarding the page with the cache server 108. The details, for example, may include the URL, the URI, the URN, and/or the communication protocol used by the page.

It should be noted that all such aforementioned modules 206, 208 (208a, 208b, 208c), and 214 may be represented as a single module or a combination of different modules. Further, as will be appreciated by those skilled in the art, each of the modules 206, 208 (208a, 208b, 208c), and 214 may reside, in whole or in parts, on one device or multiple devices in communication with each other. In some embodiments, each of the modules 206, 208 (208a, 208b, 208c), and 214 may be implemented as dedicated hardware circuit comprising custom application-specific integrated circuit (ASIC) or gate arrays, off-the-shelf semiconductors such as logic chips, transistors, or other discrete components. Each of the modules 206, 208 (208a, 208b, 208c), and 214 may also be implemented in a programmable hardware device such as a field programmable gate array (FPGA), programmable array logic, programmable logic device, and so forth. Alternatively, each of the modules 206, 208 (208a, 208b, 208c), and 214 may be implemented in software for execution by various types of processors (e.g., the processer 114). An identified module of executable code may, for instance, include one or more physical or logical blocks of computer instructions, which may, for instance, be organized as an object, procedure, function, or other construct. Nevertheless, the executables of an identified module or component need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for managing the reaching of applications. For example, the exemplary server 102 may determine the recaching action for the page by the processes discussed herein. In particular, as will be appreciated by those of ordinary skill in the art, control logic and/or automated routines for performing the techniques and steps described herein may be implemented by the server 102 either by hardware, software, or combinations of hardware and software. For example, suitable code may be accessed and executed by the one or more processors on the server 102 to perform some or all of the techniques described herein. Similarly, application specific integrated circuits (ASICs) configured to perform some, or all of the processes described herein may be included in the one or more processors on the server 102.

**FIG. 3** is a flowchart that depicts an exemplary process 300 for managing recaching of pages is illustrated, in accordance with some embodiments of the present disclosure. FIG. 3 is explained in conjunction with elements from FIGS. 1 and 2. Each step of the process may be executed by a server (such as the server 102).

In order to manage recaching of the pages, at step 302, an occurrence of a trigger event may be detected. In an embodiment, the trigger event may be a modification in a page. The modification may be content alteration in the page, structure modification in the page, or updating of metadata associated with the page. The page may belong to a website. The website may be of any of the following sectors including, but may not be limited to, retail, e-commerce, online advertising, social media, telecommunications, insurance, automotive industry, financial services, travel, transportation, logistics, real estate, public and social sector, sports, energy, mining, healthcare, education, or consumer packaged goods. Additionally, the page may be a webpage that may vary depending on the type of website. For example, in an e-commerce website, the page may include, but are not limited to a homepage, a product details page, a login page, or a checkout page. By way of another example, in a travel-based website, the page may include, but are not limited to, a homepage, destination pages, search result pages, booking pages, or review pages.

In response to detecting the occurrence of the trigger event, at step 304, a set of attributes associated with the page may be extracted. The set of attributes associated with the page may include, but is not limited to a periodically recorded frequency of modification for the page over a time period, a volume of traffic associated with the page over a plurality of time periods, a plurality of traffic sources associated with the page, a plurality of access patterns associated with the page, and data associated with users and devices (i.e., the user device) accessing the page.

Based on extraction of the set of attributes, at step 306, a set of first scores and a second score may be generated. The set of first scores may be generated based on an associated subset of the set of attributes. One of the set of first scores may be a page volatility score that is generated based on a first subset selected from the set of attributes. The page volatility score is representative of frequency of modifications associated with the page over a time period. In other words, the more frequent are modifications to a given page, higher is the page volatility score for that page. A page with a high page volatility score may require frequent recaching.

Further, the second score may be generated based on a set of network parameters. The second score may be a recaching execution score representative of the time required to recache the page. The recaching execution score may be representative of the time required by the cache server 108 (or the CDN) to recache the page. The time required to recache the page may be determined based on a plurality of pre-recorded values of the set of network parameters. In other words, the values of the network parameters at past time instances and time required to recache the page at these time instances may be used to determine the recaching execution score. The set of network parameters may include bandwidth, throughput, latency, packet loss, and jitter associated with the network being used to recache a given page at a cache server, i.e., the cache server 108.

Once each of the set of first scores and the second score are generated, at step 308, a recaching action for the page may be determined based on each of the set of first scores and the second score. In an embodiment, the reaching action may be determined using the ML model 210. In order to determine the recaching action, at step 310, a cumulative score for the page may be determined using the ML model 210. The cumulative score may be determined based on the page volatility score, the page priority score, and the recaching execution score determined for the page. In an embodiment, the recaching action may be instant recaching of the page, scheduling recaching of the page at a predetermined time, or invalidating of an existing cache page. This is further explained in detail in conjunction with FIG. 6.

By way of an example, consider an exemplary scenario where a page (e.g., a product listings page) of an e-commerce website (i.e., CLOTHES.COM) is modified. In this scenario, an occurrence of a trigger event may be detected. The trigger event may be the modification in the product listings page. For example, the modification may correspond to an addition of a new product (e.g., a floral print top) to the product listings page for which the occurrence of the trigger event is detected. The new product may be added by the developer or the administrator of the website. Based on detection of the occurrence of the trigger event, the product listings page may be analyzed to extract the set of attributes associated with the product page. The set of attributes may include, but is not limited to, the periodically recorded frequency of modification for the product page over a time period, the volume of traffic associated with the product page over the plurality of time periods, the plurality of traffic sources associated with the product page, the plurality of access patterns associated with the product page, and data associated with users and devices accessing the page. With reference to FIG. 1, the set of attributes associated with the product page may be extracted from the web server 104 and the cache server 108.

Based on extraction of the set of attributes, the set of first scores may be generated for the product listings page based on the associated subset of the set of attributes. In particular, the page volatility score and the page priority score may be generated for the product page. The page volatility score may be generated based on a first subset selected from the set of attributes. In an embodiment, the first subset may include a frequency of modifications done to the product listings page over one year of time period. Suppose the product listings page is modified on a daily basis. In this case, the page volatility score for the product listing page may be very high. In other words, the more frequent are modifications to a given page, higher is the page volatility score for that page. For example, the page volatility score for the page updated on the daily basis may be higher than the page volatility score of the page updated on weekly basis.

Further, the page priority score for the product listings page may be generated based on the second subset of the set of attributes. The page priority score for the product listings page may be determined on two levels. At the first level, the attributes used to determine the page priority score may include industry vertical (i.e., e-commerce), locale (e.g., English), breakpoint (e.g., tablet), or page type (i.e., the product listings page). It should be noted that, the attributes at the first level may be from a type of content on the page (for example, product lists, product detail information, content-heavy pages), the structure of the URL, or metadata associated with the product listings page during the analysis of the product listings page.

At the second level, the attributes used to determine the page priority score may include, but are not limited to sources of traffic to the product listings page (for example, direct, search, affiliate link, social network), patterns of traffic volume (for example, traffic time information, traffic geographical information, traffic demographical information, and concentration information), inventory availability, frequency of changes related to availability, conversion rates, or frequency of price changes. In this scenario, values of these attributes for the product listings page may be as follows: **Traffic Source:** FACEBOOK^{®}, **Region:** India, **Age:** 18 - 30 years, **Gender:** Female, **Inventory Availability:** In stock, and **Conversion Rate:** between 15%- 20%. Further, each of the attributes at the second level may be assigned weight. For example, in present scenario, the attribute **'Traffic Source'** may have the weight of '0.3', the attribute **'Region'** may have the weight of '0.6', the attribute **'Age'** may have the weight of '0.7', and the like. In particular, an attribute that may have greater impact on distinguishing priority or importance of a page may be assigned higher weights, while a less influential attribute may be assigned a lower weight. Further, the page priority score for the product listings page may be determined as the weighted sum of values of relevant attributes for the product listings page.

Further, the second score, i.e., the recaching execution score may be generated for the product listing page based on a plurality of pre-recorded values of the set of network parameters. In other words, the values of the network parameters at past time instances and time required to recache the product listing page at these time instances may be used to determine the recaching execution score. The set of network parameters including bandwidth, throughput, latency, packet loss, and jitter associated with a communication network (e.g., the communication network 112) being used to recache the product listings page at the cache server 108. The page volatility score, the page priority score, and the recaching execution score may be used by the ML model 210 to compute a cumulative score for the product listings page. Further, based on the cumulative score computed, the recaching action may be determined for the product listings page. The recaching action may be instant recaching of the page, scheduling recaching of the page at a predetermined time, or invalidating of an existing cache page.

**FIG. 4** illustrates a flowchart of an exemplary process 400 for training the ML model 210 to determine a recaching action for a page, in accordance with some embodiments of the present disclosure. FIG. 4 is explained in conjunction with FIGs. 1-3.

Examples of the ML model 210 may include, but are not limited to, logistic regression, naive Bayes, K Nearest Neighbors, random forest, boosting algorithms, k-means, hierarchical clustering, Convoluted Neural Network (CNN), Recurrent Neural Network (RNN), Multi-Layer Perceptrons (MLP), Long Short Term Memory (LSTM), Generative Adversarial Networks (GANs), Radial Basis Function Networks (RBFNs), Self-Organizing Maps (SOMs), Deep Belief Networks (DBNs), Restricted Boltzmann Machines( RBMs), or Graph Neural Network (GNN).

In order to train the ML model 210, initially, at step 402, a training dataset of pages may be selected. With reference to FIG. 2, the training dataset of pages may correspond to the training dataset 212. In an embodiment, a first recaching pattern for each of the training dataset of pages is predetermined by a user (e.g., a developer or an administrator) based on the associated set of first scores and the second score. In other words, the user may manually define the first recaching pattern for each of the training dataset of pages based on values determined for each of the set of attributes associated with each of the training dataset of pages. Further, at step 404, a second recaching pattern may be determined for each of the training data set of pages. The second recaching pattern may be determined based on the associated set of first scores and the second score. Further, at step 406, the second recaching pattern determined for each of the training data set of pages may be compared with the first recaching pattern predetermined for a corresponding training page.

Further, at step 408, a degree of accuracy of the ML model 210 may be determined based on the comparison. Based on determining the degree of accuracy, at step 410, reinforcement learning may be performed on the ML model 210 based on the degree of accuracy determined for the ML model 210. In other words, the determined degree of accuracy may be fed back as an input to the ML model 210 to perform reinforcement learning. Additionally, there may be a human in the loop as well, who may help in determining adjustments that should be made to the ML model 210, such that the ML model 210 is able to accurately determine the recaching action for the page. This cycle is repeated till the degree of accuracy of the ML model 210 is above an acceptable threshold.

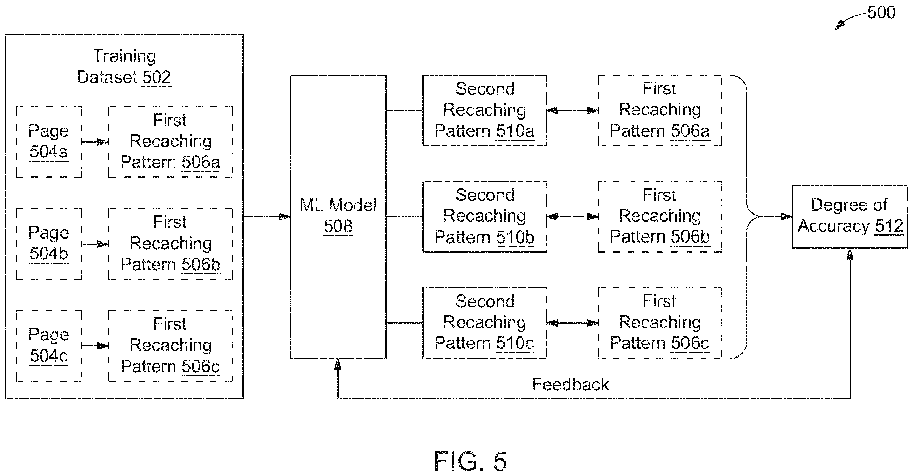

**FIG. 5** is a flow diagram 500 depicting training of an ML model 508 to determine a recaching action for a page, in accordance with some embodiments of the present disclosure. FIG. 5 is explained in conjunction with elements from FIGs. 1-4. Initially, a training dataset 502, i.e., the training dataset of pages may be selected. The training dataset 502 may include a plurality of pages, for example, a page 504a, a page 504b, and a page 504c. Further, for each of the plurality of pages, the first recaching pattern may be predetermined by the user (e.g., a developer or an administrator). For example, a first recaching pattern 506a may be predetermined for the page 504a, a first recaching pattern 506b may be predetermined for the page 504b, and a first recaching pattern 506c may be predetermined for the page 504c. In an embodiment, each of the first recaching pattern 506a, 506b, and 506c may be predetermined based on values of the set of attributes associated with a corresponding page, i.e., the page 504a, the page 504b, and the page 504c, respectively. The first recaching pattern 506a, 506b, and 506c for the page 504a, 504b, and 504c may be determined based on the associated set of first scores and the second score.

Once the training dataset 502 is selected, the training dataset 502 may be fed as an input to the ML model 508. With reference to FIG. 1, the ML model 502 may correspond to the ML model 210. Based on receiving the training dataset 502, the ML model 508 may be configured to determine a second recaching pattern for each of the page 504a, the page 504b, and the page 504c. In particular, a second recaching pattern 510a may be determined for the page 504a, a second recaching pattern 510b may be determined for the page 504b, and a third recaching pattern 510c may be determined for the page 504c. The ML model 508 may determine the second recaching pattern, i.e., 510a, 510b, and 510C for the page 504a, 504b, and 504c, respectively, based on the associated set of first scores and the second score.

Based on determination of the second recaching pattern, the second recaching pattern determined for each of the plurality of pages may be compared with the first reaching pattern determined for a page of the plurality of pages. In particular, the second recaching pattern 510a determined for the page 504a may be compared with the first recaching pattern 506a. Similarly, the second recaching pattern 510b and 510c determined for the page 504b and 504c may be compared with the first recaching pattern 506b and 506c, respectively. Further, based on the comparison, a degree of accuracy 512 of the ML model 508 may be determined. The degree of accuracy 512 may be fed back to the ML model 508 in order to perform the reinforcement learning. Additionally, there may be a human in the loop as well, who may help in determining adjustments that should be made to the ML model 508, such that, the ML model 508 is able to accurately determine the recaching action for the plurality of pages. This cycle is repeated till the degree of accuracy 512 of the ML model 508 is above an acceptable threshold.

**FIG. 6** illustrates a flowchart of an exemplary process 600 for determining a recaching action for a page, in accordance with some embodiments of the present disclosure. FIG. 6 is explained in conjunction with FIGs. 1-5.

In order to determine the recaching action for the page, at step 602, the cumulative score for the page may be determined. In an embodiment, the cumulative score may be determined based on the page volatility score, the page priority score, and the recaching execution score. Further, based on the determined cumulative score, at step 604, a check may be performed to determine whether the cumulative score that is determined for the page is above a first predefined threshold. By way of an example, suppose the first cumulative score may be determined to be 80%. In one embodiment, based on the check performed at step 604, when the cumulative score for the page is determined to be above the first predefined threshold, then at step 606, the page may be recached. In other words, the recache action for the page may be instantly communicated to the cache server 108, when the cumulative score is above the first predefined threshold. For example, suppose, suppose the cumulative score for the page was determined to be 90%. In this case, since the cumulative score, i.e., 90% is above the first predefined threshold, i.e., 80%, therefore the recache action may be instantly communicated to the cache server 108. In another embodiment, based on the check performed at step 604, when the cumulative score for the page is determined to be below the first predefined threshold, then step 608 may be executed. For example, suppose, suppose the cumulative score for the page was determined to be 70%. In this case, since the cumulative score, i.e., 60% is below the first predefined threshold, i.e., 70%, therefore the step 608 may be executed.

At step 608, a check may be performed to determine whether the cumulative score is less than equal to the first predefined threshold (i.e., 80%) and above a second predefined threshold. By way of an example, suppose the second cumulative score may be determined to be 60%. In one embodiment, based on the check performed at step 608, when the cumulative score is less than equal to the first predefined threshold and above the second predefined threshold, then at step 610, the recaching of the page may be scheduled at a predetermined time. In other words, the recache action may be communicated to the cache server 108 at the predetermined time. For example, suppose the cumulative score is determined 65%. In this embodiment, since the cumulative score, i.e., 65% is less than the first predefined threshold, i.e., 80% and is above the second predefined threshold 60%, therefore the recache action may be communicated to the cache server 108 at the predetermined time. In another embodiment, based on the check performed at step 608, when the cumulative score is determined to be less than equal to the second predefined threshold, then at step 612, the existing cache page may be invalidated. In other words, the recache action of invalidating the existing cache may be communicated to the cache server 108 either instantly or at the predetermined time. For example, suppose the cumulative score is determined 55%. In this embodiment, since the cumulative score, i.e., 55% is less than the first predefined threshold, i.e., 80% and is less than the second predefined threshold 60%, therefore the existing cache page may be invalidated.

**FIG. 7** illustrates a flowchart of an exemplary process 700 for recaching a plurality of pages, in accordance with some embodiments of the present disclosure. FIG. 7 is explained in conjunction with FIGs. 1-6.

In order to perform the recaching of the plurality of pages, at step 702, a cumulative score may be determined for each of the plurality of pages. As already explained in FIGS. 2 and 3, the cumulative score for each of the plurality of pages may be determined based on the page volatility score, the page priority score, and the recaching execution score associated with each of the plurality of pages. Once the cumulative score is determined for each of the plurality of pages, at step 704, a sequence of transmitting the recaching action may be determined for each of the plurality of pages. The sequence of transmitting the recaching action may be determined based on the cumulative score associated with each of the plurality of page. For example, a page with a highest cumulative score may be transmitted first in the sequence followed with subsequent pages of the plurality of pages based on the associated cumulative score resulting in the page with the lowest cumulative score being transmitted at last in the sequence. Based on determining the sequence, at step 706, the recaching action determined for each of the plurality of pages may be transmitted to the cache server 108 in accordance with the determined sequence. It may be noted that along with the recaching action, details regarding the plurality of pages may also be shared with the cache server 108. The details, for example, may include the URL, the URI, the URN, and/or the communication protocol used by each of the plurality of pages.

As will be also appreciated, the above-described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

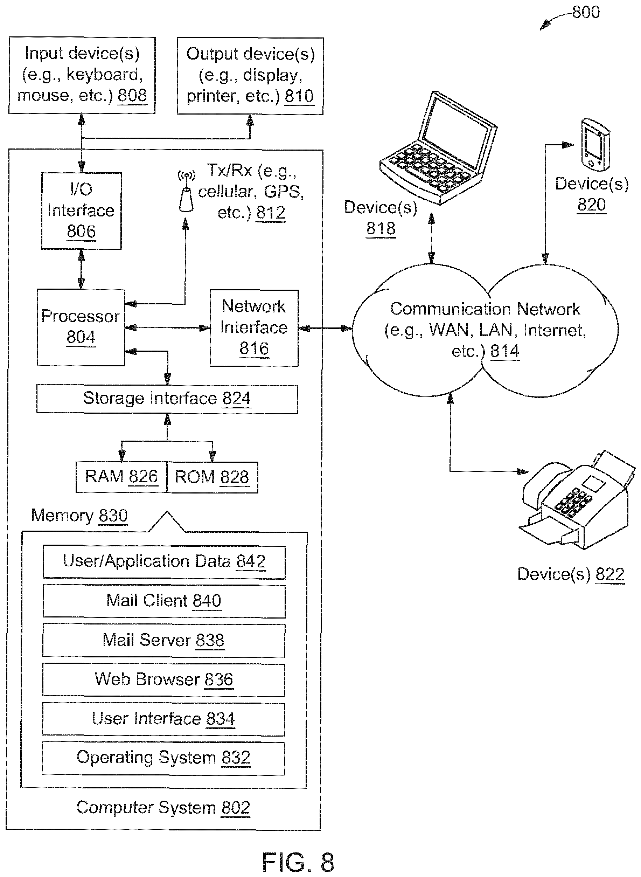

The disclosed methods and systems may be implemented on a conventional or a general-purpose computer system, such as a personal computer (PC) or server computer. FIG. 8 is a block diagram that illustrates a system architecture 800 of a computer system 802 for managing extensions of a product, in accordance with an exemplary embodiment of the present disclosure. Variations of the computer system 802 may be used for implementing the server 102 for managing recaching of applications. The computer system 802 may include a central processing unit ("CPU" or "processor") 804. The processor 804 may include at least one data processor for executing program components for executing user or system-generated requests. A user may include a person, a person using a device, such as those included in this disclosure, or such a device itself. The processor 804 may include specialized processing units such as integrated system (bus) controllers, memory management control units, floating point units, Graphics Processing Units, digital signal processing units, etc. The processor 804 may include a microprocessor, such as AMD^{®} ATHLOM^{®} microprocessor, DURON^{®} microprocessor OR OPTERON^{®} microprocessor, ARM's application, embedded or secure processors, IBM^{®}POWERPC^{®}, INTEL'S CORE^{®} processor, ITANIUM^{®} processor, XEON^{®} processor, CELERON^{®} processor or other line of processors. Examples of GPUs may include, but are not limited to NVIDIA^{®} QUADRO^{®}, NVIDIA^{®} RTX^{®}, AMD^{®} FIREPRO^{®}, AMD^{®} RADEON PRO^{®}, INTEL^{®} ARC^{®}, INTEL^{®} ARC PRO^{®}, GEFORCE^{®} GTX^{®}, RTX^{®}, NVIDIA^{®} TITAN^{®}, RADEON HD^{®}, or RADEON VII^{®}. The processor 804 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

The processor 804 may be disposed in communication with one or more input/output (I/O) devices via an I/O interface 806. The I/O interface 806 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (for example, code-division multiple access (CDMA), high-speed packet access (HSPA+), global system for mobile communications (GSM), long-term evolution (LTE), WiMAX, or the like), etc.

Using the I/O interface 806, the computer system 802 may communicate with the one or more I/O devices. For example, an input device 808 may be an antenna, keyboard, mouse, joystick, (infrared) remote control, camera, card reader, fax machine, dongle, biometric reader, microphone, touch screen, touchpad, trackball, sensor (for example, accelerometer, light sensor, GPS, gyroscope, proximity sensor, or the like), stylus, scanner, storage device, transceiver, video device/source, visors, etc. An output device 810 may be a printer, fax machine, video display (for example, cathode ray tube (CRT), liquid crystal display (LCD), light-emitting diode (LED), plasma, or the like), audio speaker, etc. In some embodiments, a transceiver 812 may be disposed in connection with the processor 804. The transceiver 812 may facilitate various types of wireless transmission or reception. For example, the transceiver 812 may include an antenna operatively connected to a transceiver chip (for example, TEXAS^{®} INSTRUMENTS WILINK WL1286^{®} transceiver, BROADCOM^{®} BCM4550IUB8^{®} transceiver, INFINEON TECHNOLOGIES^{®} X-GOLD 618-PMB9800^{®} transceiver, or the like), providing IEEE 802.6a/b/g/n, Bluetooth, FM, global positioning system (GPS), 2G/3G HSDPA/HSUPA communications, etc.

In some embodiments, the processor 804 may be disposed in communication with a communication network 814 via a network interface 816. The network interface 816 may communicate with the communication network 814. The network interface 816 may employ connection protocols including, without limitation, direct connect, Ethernet (for example, twisted pair 10/100/1000 Base T), transmission control protocol/internet protocol (TCP/IP), token ring, IEEE 802.11a/b/g/n/x, etc. The communication network 814 may include, without limitation, a direct interconnection, local area network (LAN), wide area network (WAN), wireless network (for example, using Wireless Application Protocol), the Internet, etc. Using the network interface 816 and the communication network 814, the computer system 802 may communicate with devices 818, 820, and 822. These devices may include, without limitation, personal computer(s), server(s), fax machines, printers, scanners, various mobile devices such as cellular telephones, smartphones (for example, APPLE^{®} IPHONE^{®} smartphone, BLACKBERRY^{®} smartphone, ANDROID^{®} based phones, etc.), tablet computers, eBook readers (AMAZON^{®} KINDLE^{®} reader, NOOK^{®} tablet computer, etc.), laptop computers, notebooks, gaming consoles (MICROSOFT^{®} XBOX^{®} gaming console, NINTENDO^{®} DS^{®} gaming console, SONY^{®} PLAYSTATION^{®} gaming console, etc.), or the like. In some embodiments, the computer system 802 may itself embody one or more of these devices.

In some embodiments, the processor 804 may be disposed in communication with one or more memory devices (for example, a Random Access Memory (RAM) 826, a Read-Only Memory (ROM) 828, etc.) via a storage interface 824. The storage interface 824 may connect to a memory 830 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory 830 may store a collection of program or database components, including, without limitation, an operating system 832, a user interface 834, a web browser 836, a mail server 838, a mail client 840, user/application data 842 (for example, any data variables or data records discussed in this disclosure), etc. The operating system 832 may facilitate resource management and operation of the computer system 802. Examples of the operating systems 832 include, without limitation, APPLE^{®} MACINTOSH^{®} OS X platform, UNIX platform, Unix-like system distributions (for example, Berkeley Software Distribution (BSD), FreeBSD, NetBSD, OpenBSD, etc.), LINUX distributions (for example, RED HAT^{®}, UBUNTU^{®}, KUBUNTU^{®}, etc.), IBM^{®} OS/2 platform, MICROSOFT^{®} WINDOWS^{®} platform (XP, Vista/7/8, etc.), APPLE^{®} IOS^{®} platform, GOOGLE^{®} ANDROID^{®} platform, BLACKBERRY^{®} OS platform, or the like. The user interface 834 may facilitate display, execution, interaction, manipulation, or operation of program components through textual or graphical facilities. For example, user interfaces may provide computer interaction interface elements on a display system operatively connected to the computer system 802, such as cursors, icons, check boxes, menus, scrollers, windows, widgets, etc. Graphical user interfaces (GUIs) may be employed, including, without limitation, APPLE^{®} Macintosh^{®} operating systems' AQUA^{®} platform, IBM^{®} OS/2^{®} platform, MICROSOFT^{®} WINDOWS^{®} platform (for example, AERO^{®} platform, METRO^{®} platform, etc.), UNIX X-WINDOWS, web interface libraries (for example, ACTIVEX^{®} platform, JAVA^{®} programming language, JAVASCRIPT^{®} programming language, AJAX^{®} programming language, HTML, ADOBE^{®} FLASH^{®} platform, etc.), or the like.

In some embodiments, the computer system 802 may implement a web browser 836 stored program component. The web browser 836 may be a hypertext viewing application, such as MICROSOFT^{®} INTERNET EXPLORER^{®} web browser, GOOGLE^{®} CHROME^{®} web browser, MOZILLA^{®} FIREFOX^{®} web browser, APPLE^{®} SAFARI^{®} web browser, etc. Secure web browsing may be provided using HTTPS (secure hypertext transport protocol), secure sockets layer (SSL), Transport Layer Security (TLS), etc. Web browsers may utilize facilities such as AJAX, DHTML, ADOBE^{®} FLASH^{®} platform, JAVASCRIPT^{®} programming language, JAVA^{®} programming language, application programming interfaces (APIs), etc. In some embodiments, the computer system 802 may implement a mail server 838 stored program component. The mail server 838 may be an Internet mail server such as MICROSOFT^{®} EXCHANGE^{®} mail server, or the like. The mail server 838 may utilize facilities such as ASP, ActiveX, ANSI C++/C#, MICROSOFT .NET^{®} programming language, CGI scripts, JAVA^{®} programming language, JAVASCRIPT^{®} programming language, PERL^{®} programming language, PHP^{®} programming language, PYTHON^{®} programming language, WebObjects, etc. The mail server 838 may utilize communication protocols such as internet message access protocol (IMAP), messaging application programming interface (MAPI), Microsoft Exchange, post office protocol (POP), simple mail transfer protocol (SMTP), or the like. In some embodiments, the computer system 802 may implement a mail client 840 stored program component. The mail client 840 may be a mail viewing application, such as APPLE MAIL^{®} mail-client, MICROSOFT ENTOURAGE^{®} mail client, MICROSOFT OUTLOOK^{®} mail client, MOZILLA THUNDERBIRD^{®} mail client, etc.

In some embodiments, the computer system 802 may store user/application data 842, such as the data, variables, records, etc. as described in this disclosure, in one or more databases. Such databases may be implemented as fault-tolerant, relational, scalable, secure databases such as ORACLE^{®} database OR SYBASE^{®} database. Alternatively, such databases may be implemented using standardized data structures, such as an array, hash, linked list, struct, structured text file (for example, XML), table, or as object-oriented databases (for example, using OBJECTSTORE^{®} object database, POET^{®} object database, ZOPE^{®} object database, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques described in the various embodiments discussed above are not routine, or conventional, or well understood in the art. The techniques discussed above provided for managing recaching of pages. The techniques provide an efficient way to determine in real-time whether the recaching of a page of a website is required or not. By dynamically evaluating worthiness of recaching of the pages, the techniques enable the websites to deliver up-to-date content without compromising performance. The techniques ensures that recaching resources are allocated efficiently by preventing unnecessary recaching of the pages that are unlikely to be accessed frequently or have content that changes rapidly, thereby conserving server resources and reducing overhead. The techniques enhance overall user experience by improving loading time of the pages and improving websites responsiveness. The techniques may be scalable and may manage a large number of pages. This makes it suitable for large-scale websites with thousands or even millions of pages.

Additionally, the techniques discussed above may be used for managing the pages in any of the retail sector, e-commerce sector, online advertising sector, social media sector, telecommunications sector, insurance sector, automotive industry, financial services, travel sector, transportation sector, logistics sector, real estate sector, public and social sector, sports sector, energy sector, mining sector, healthcare sector, education sector, or consumer packaged goods sector. Moreover, the techniques discussed above may be implemented on one of a consumer website, an enterprise website, a consumer web application, an enterprise web application, or an instore display application.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described method and system for managing recaching of pages. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

The application provides at least the following embodiments:
1. A method for managing recaching of pages, the method comprising:
   extracting, by a processor, a set of attributes associated with a page;
   generating, by the processor, a set of first scores and a second score, wherein each of the set of first scores is generated based on an associated subset of the set of attributes and the second score is generated based on a set of network parameters; and
   determining, by the processor using a Machine Learning (ML) model, a recaching action for the page, based on the set of first scores and the second score.
2. The method of embodiment 1, further comprising detecting occurrence of a trigger event, wherein the set of attributes are extracted in response to the detection of occurrence of the trigger event.
3. The method of embodiment 2, wherein the trigger event comprises a modification in the page, and wherein the modification comprises content alteration in the page, structure modification in the page, or updating of metadata associated with the page.
4. The method of embodiment 1, wherein the set of attributes comprises at least one of:
   a periodically recorded frequency of modification for the page over a time period;
   volume of traffic associated with the page over a plurality of time periods;
   a plurality of traffic sources associated with the page;
   a plurality of access patterns associated with the page; and
   data associated with users and devices accessing the page.
5. The method of embodiment 1, wherein the set of first scores comprises a page volatility score generated based on a first subset selected of the set of attributes, and wherein the page volatility score is representative of frequency of modifications associated with the page over a time period.
6. The method of embodiment 1, wherein the set of first scores comprises a page priority score generated based on a second subset of the set of attributes, and wherein the page priority score is representative of weighted average of attributes in the second subset.
7. The method of embodiment 1, further comprising determining a time required to recache the page, based on a plurality of pre-recorded values of the set of network parameters.
8. The method of embodiment 7, wherein the second score comprises a recaching execution score representative of the time required to recache the page.
9. The method of embodiment 1, further comprising training the ML model, wherein the training comprises:
   selecting a training dataset of pages, wherein a first recaching pattern for each of the training data set of pages is predetermined by a user based on the associated set of first scores and the second score;
   determining, by the ML model, a second recaching pattern for each of the training dataset of pages, based on the associated set of first scores and the second score;
   comparing, for each of the training dataset of pages, the second recaching pattern with the first recaching pattern;
   determining a degree of accuracy of the ML model based on the comparing; and
   performing reinforcement learning on the ML model, based on the degree of accuracy determined for the ML model.
10. The method of embodiment 1, wherein determining the recaching action comprises determining, by the ML model, a cumulative score for the page, and wherein the recaching action comprises one of:
   recaching the page when the cumulative score is above a first predefined threshold;
   scheduling recaching of the page at a predetermined time, when the cumulative score is less than equal to the first predefined threshold and above a second predefined threshold; and
   invalidating of an existing cache page when the cumulative score is less than equal to the second predefined threshold.
11. The method of embodiment 10, wherein the ML model determines a cumulative score for each of a plurality of pages, wherein the plurality of pages comprises the page.
12. The method of embodiment 11, further comprising:
   determining a sequence of transmitting the recaching action determined for each of the plurality of pages, based on the cumulative score associated with each of the plurality of pages; and
   transmitting the recaching action determined for each of the plurality of pages in accordance with the determined sequence.
13. A system for managing recaching of pages, the system comprising:
   a processer; and
   a memory communicatively coupled to the processer, wherein the memory stores processor-executable instructions, which, on execution, causes the processer to:
      extract a set of attributes associated with a page;
      generate a set of first scores and a second score, wherein each of the set of first scores is generated based on an associated subset of the set of attributes and the second score is generated based on a set of network parameters; and
      determine a recaching action for the page, based on the set of first scores and the second score using a Machine Learning (ML) model.
14. The system of embodiment 13, wherein the processor-executable instructions further cause the processer to detect occurrence of a trigger event, and wherein the set of attributes are extracted in response to the detection of occurrence of the trigger event.
15. The system of embodiment 14, wherein the trigger event comprises a modification in the page, and wherein the modification comprises content alteration in the page, structure modification in the page, or updating of metadata associated with the page.
16. The system of embodiment 13, wherein the set of attributes comprises at least one of:
   a periodically recorded frequency of modification for the page over a time period;
   a volume of traffic associated with the page over a plurality of time periods;
   a plurality of traffic sources associated with the page;
   a plurality of access patterns associated with the page; and
   data associated with users and devices accessing the page.
17. The system of embodiment 13, wherein the set of first scores comprises a page volatility score generated based on a first subset selected of the set of attributes, and wherein the page volatility score is representative of frequency of modifications associated with the page over a time period.
18. The system of embodiment 13, wherein the set of first scores comprises a page priority score generated based on a second subset of the set of attributes, and wherein the page priority score is representative of weighted average of attributes in the second subset.
19. The system of embodiment 13, wherein the processor-executable instructions further cause the processer to determine a time required to recache the page, based on a plurality of pre-recorded values of the set of network parameters.
20. A non-transitory computer-readable medium storing computer-executable instructions for managing recaching of pages, the stored computer-executable instructions, when executed by a processer, cause the processer to perform operations comprising:
   extracting a set of attributes associated with a page;
   generating a set of first scores and a second score, wherein each of the set of first scores is generated based on an associated subset of the set of attributes and the second score is generated based on a set of network parameters; and
   determining a recaching action for the page, based on the set of first scores and the second score using a Machine Learning (ML) model.

It is intended that the disclosure and examples be considered as exemplary only, with a true scope and spirit of disclosed embodiments being indicated by the following claims.

## Claims

1. A method for managing recaching of pages, the method comprising:
extracting (304), by a processor (114), a set of attributes associated with a page;
generating (306), by the processor (114), a set of first scores and a second score, wherein each of the set of first scores is generated based on an associated subset of the set of attributes and the second score is generated based on a set of network parameters; and
determining (308), by the processor (114) using a Machine Learning (ML) model (118), a recaching action for the page, based on the set of first scores and the second score.

2. The method as claimed in claim 1, further comprising detecting (302) occurrence of a trigger event, wherein the set of attributes are extracted in response to the detection of occurrence of the trigger event, and wherein the trigger event comprises a modification in the page, and wherein the modification comprises content alteration in the page, structure modification in the page, or updating of metadata associated with the page.

3. The method as claimed in claim 1 or claim 2, wherein the set of attributes comprises at least one of:
a periodically recorded frequency of modification for the page over a time period;
a volume of traffic associated with the page over a plurality of time periods;
a plurality of traffic sources associated with the page;
a plurality of access patterns associated with the page; and
data associated with users and devices accessing the page.

4. The method as claimed in any preceding claim, wherein the set of first scores comprises a page volatility score generated based on a first subset selected of the set of attributes, and wherein the page volatility score is representative of frequency of modifications associated with the page over a time period, and wherein the set of first scores comprises a page priority score generated based on a second subset of the set of attributes, and wherein the page priority score is representative of weighted average of attributes in the second subset.

5. The method as claimed in any preceding claim, further comprising determining a time required to recache the page, based on a plurality of pre-recorded values of the set of network parameters, wherein the second score comprises a recaching execution score representative of the time required to recache the page.

6. The method as claimed in preceding claim, further comprising training the ML model (118), wherein the training comprises:
selecting (402) a training dataset of pages, wherein a first recaching pattern for each of the training data set of pages is predetermined by a user based on the associated set of first scores and the second score;
determining (404), by the ML model (118), a second recaching pattern for each of the training dataset of pages, based on the associated set of first scores and the second score;
comparing (406), for each of the training dataset of pages, the second recaching pattern with the first recaching pattern;
determining (408) a degree of accuracy of the ML model (118) based on the comparing; and
performing (410) reinforcement learning on the ML model (118), based on the degree of accuracy determined for the ML model (118).

7. The method of any preceding claim, wherein determining (308) the recaching action comprises determining (310), by the ML model (118), a cumulative score for the page, and wherein the recaching action comprises one of:
recaching the page when the cumulative score is above a first predefined threshold;
scheduling recaching of the page at a predetermined time, when the cumulative score is less than equal to the first predefined threshold and above a second predefined threshold; and
invalidating of an existing cache page when the cumulative score is less than equal to the second predefined threshold.

8. The method of claim 7, wherein the ML model determines (702) a cumulative score for each of a plurality of pages, wherein the plurality of pages comprises the page.

9. The method of claim 8, further comprising:
determining (704) a sequence of transmitting the recaching action determined for each of the plurality of pages, based on the cumulative score associated with each of the plurality of pages; and
transmitting (706) the recaching action determined for each of the plurality of pages in accordance with the determined sequence.

10. A system for managing recaching of pages, the system (100) comprising:
a processer (114); and
a memory (116) communicatively coupled to the processer (114), wherein the memory (116) stores processor-executable instructions, which, on execution, causes the processer (114) to:
extract (304) a set of attributes associated with a page;
generate (306) a set of first scores and a second score, wherein each of the set of first scores is generated based on an associated subset of the set of attributes and the second score is generated based on a set of network parameters; and
determine (308) a recaching action for the page, based on the set of first scores and the second score using a Machine Learning (ML) model.

11. The system of claim 10, wherein the processor-executable instructions further cause the processer to detect occurrence of a trigger event, and wherein the set of attributes are extracted in response to the detection of occurrence of the trigger event.

12. The system of claim 11, wherein the trigger event comprises a modification in the page, and wherein the modification comprises content alteration in the page, structure modification in the page, or updating of metadata associated with the page.

13. The system of any one of claims 10 to 12, wherein the set of attributes comprises at least one of:
a periodically recorded frequency of modification for the page over a time period;
a volume of traffic associated with the page over a plurality of time periods;
a plurality of traffic sources associated with the page;
a plurality of access patterns associated with the page; and
data associated with users and devices accessing the page.

14. The system of any one of claims 10 to 13, wherein the set of first scores comprises a page volatility score generated based on a first subset selected of the set of attributes, and wherein the page volatility score is representative of frequency of modifications associated with the page over a time period.

15. The system of any one of claims 10 to 14, wherein the set of first scores comprises a page priority score generated based on a second subset of the set of attributes, and wherein the page priority score is representative of weighted average of attributes in the second subset.
